# EUROPÄISCHE PATENTSCHRIFT

(11) **EP 1 648 642 B1**
(45) Veröffentlichungstag und Bekanntmachung des Hinweises auf die Patenterteilung: **20.02.2008**
(21) Anmeldenummer: 04739549.6
(22) Anmeldetag: 03.06.2004
(51) Int. Cl.: B23B 51/06

(54) **BOHRER**
DRILL
FORET

(30) Priorität: 23.07.2003 DE 10333340
(43) Veröffentlichungstag der Anmeldung: 26.04.2006
(73) Patentinhaber: KENNAMETAL INC., Latrobe, PA 15650-0231 (US)
(72) Erfinder: BORSCHERT, Bernhard, 96050 Bamberg (DE); KRENZER, Ulrich, 90513 Zirndorf (DE); BÜTTNER, Rainer, 91452 Wilhermsdorf (DE)
(74) Vertreter: Dörr, Matthias
(86) Internationale Anmeldenummer: PCT/EP2004/005974
(87) Internationale Veröffentlichungsnummer: WO 2005/018857

(56) Entgegenhaltungen:
- EP-A- 0 589 333
- DE-A- 10 157 450
- US-A- 3 436 990
- US-A- 6 045 301

## Beschreibung

Die Erfindung betrifft ein Bohrwerkzeug, insbesondere für metallische Werkstoffe, mit mindestens zwei Schneidkanten und jeweils einer von den Schneidkanten in Richtung zum Schaft des Werkzeugs ausgehenden, zumindest teilweise gedrallten Spannut. Ein derartiger Bohrer ist beispielsweise aus der EP 0 750 960 B1 bekannt.

Zerspanungswerkzeuge, insbesondere Bohrer, werden häufig unter Verwendung von Kühlschmiermitteln betrieben, welche der Schneidkante oder den Schneidkanten des Werkzeugs durch Kühlkanäle im Werkzeug zugeführt werden. Beim aus der EP 0 750 960 B1 bekannten Werkzeug spaltet sich ein vom Schaftende ausgehender zentraler Kühlkanal in mehrere Teilkanäle auf, an welche sich am schneidenseitigen Ende des Bohrers rechtwinklig abknickend nutenförmige Stichkanäle anschließen. Die Kühlmittelzuführung ist damit sehr aufwändig gestaltet.

Aus US 3,436,990 ist ein Bohrer mit einem zentralen Kühlkanal zu entnehmen, welcher zur vorderen Bohrerspitze hin sich in Teilkanäle aufteilt, die schräg nach außen zur Bohrerlängsachse orientiert sind. Die DE 101 57 450 A1 befasst sich mit dem Problem der Einspeisung von Kühlmittel in das rückseitige Ende des Bohrerschafts und sieht einen Einsatz vor, über den das Kühlmittel ohne großwinklige Umlenkungen in den Bohrerschaft eingespeist wird.

Der Erfindung liegt die Aufgabe zugrunde, einen Bohrer mit einer konstruktiv besonders einfach gestalteten und wirksamen Kühlmittelzuführung anzugeben.

Diese Aufgabe wird erfindungsgemäß gelöst durch einen Bohrer mit den Merkmalen des Anspruchs 1. Dieser Bohrer weist mindestens zwei Schneidkanten sowie zwei sich vom schneidenseitigen Ende des Bohrers in Richtung zum Schaftende erstreckende, zumindest teilweise gewendelte Spannuten auf. Jeder Schneide ist ein Kühlkanal zugeordnet, welcher sich derart von einer Eintrittsöffnung am Schaftende bis zu einer Austrittsöffnung in der Spannut erstreckt, dass das Kühlmittel oder Kühlschmiermittel in Werkzeuglängsrichtung direkt auf die Schneidkante geleitet wird. Der Kühlkanal verläuft in dessen ganzer Länge vollständig oder annähernd geradlinig und ist zumindest im Wesentlichen parallel von der Werkzeugachse beabstandet.

Die vollständig gerade Ausbildung der entsprechend der Anzahl der Schneidkanten mindestens zwei Kühlkanäle begünstigt zum einen eine rationelle Fertigung des Bohrers. Zum andern haben die durchgängig geraden Kühlkanäle auch strömungstechnische Vorteile, insbesondere bei mit einem Luft-Öl-Gemisch arbeitender Minimalmengenschmierung. Über die widerstandsarme Strömung hinaus ist in diesem Fall der Verzicht auf Umlenkungen des Kühlschmiermittels innerhalb des Bohrers besonders relevant. Eine Entmischung des Öl-Luft-Gemisches, wie sie insbesondere bei scharfkantigen Umlenkungen auftreten kann, wird vermieden. Das Werkzeug ist daher mit besonders geringen Ölmengen auch bei hohen Bearbeitungsgeschwindigkeiten verwendbar.

Weitere Vorteile des Werkzeugs ergeben sich daraus, dass das Kühlschmiermittel von der axial von der Werkzeugspitze aus zurückversetzten Austrittsöffnung des Kühlkanals zur Schneidkante geleitet wird:

Jegliche Schwächung des Werkzeugs im mechanisch besonders beanspruchten Bereich der Werkzeugspitze ist durch die in Richtung zum Werkzeugschaft zurückversetzten Austrittsöffnungen der Kühlmittelkanäle ausgeschlossen. Vorzugsweise beträgt der axiale Abstand zwischen der Mitte der Austrittsöffnung des Kühlkanals und einem die Schneidkante am Werkzeugumfang begrenzenden Schneideneck mindestens 75% und höchstens das Zweifache des Werkzeugdurchmessers.

Der Ausstoß des Kühlmittels zumindest im Wesentlichen in Längsrichtung des Werkzeugs hat im Vergleich beispielsweise zu einem Kühlmittelaustritt an der Außenseite des Werkzeugs den Vorteil, dass die Kühlung und/oder Schmierung bereits beim Ansetzen des Bohrers an das zu bearbeitende Werkstück wirksam ist. Dagegen wird im Fall einer am Werkzeugumfang angeordneten Austrittsöffnung, durch welche das Kühlschmiermittel mit einer Bewegungskomponente radial nach außen abgeleitet wird, die gewünschte Wirksamkeit des Kühlschmiermittels nicht erreicht, bevor der Bohrer einschließlich der Austrittsöffnung in das Werkstück eingedrungen ist.

Im Zerspanungsbetrieb trifft das durch die Kühlkanäle geleitete Kühlschmiermittel vorzugsweise nicht direkt auf die Schneidkante, sondern auf den an dieser gebildeten Span oder zwischen den Span und die Spanfläche. In Querschnittsbetrachtung des Werkzeugs beträgt der Verdrehwinkel zwischen der Austrittsöffnung des Kühlkanals und der Schneidkante bevorzugt mindestens -20° und maximal +45°, insbesondere mindestens -5° und maximal +15°. Der Verdrehwinkel ist dabei als positiv definiert, wenn bei der Rotation des Werkzeugs die Austrittsöffnung des Kühlkanals der Schneidkante vorauseilt. An der nicht unmittelbar durch das aus den Austrittsöffnungen der Kühlkanäle ausströmende Kühlschmiermittel gekühlten Schneidkante können sich im Zerspanungsbetrieb hohe Temperaturen entwickeln. Dies ist besonders günstig für die Bearbeitung harter Werkstoffe, da damit deren typischerweise stark temperaturabhängige mechanische Eigenschaften gezielt ausgenutzt werden. Durch den direkt auf den Span treffenden Kühlmittelstrahl wird dieser abgeschreckt und weist damit in Abhängigkeit vom bearbeiteten Material tendenziell kurz brechende Eigenschaften auf. Damit ist in gewünschter Weise sowohl eine Übertragung eines großen Teils der Zerspanungswärme an den Span als auch eine leichte Spanabfuhr erreicht. Der an den Bohrer übertragene Anteil der Zerspanungswärme wird dagegen vergleichsweise gering gehalten, so dass sich der Bohrer bei der Bearbeitung höchstens geringfügig ausdehnt. Auf diese Weise ist eine besonders hohe Fertigungspräzision beim Bohren erreichbar.

Durch den exzentrischen Verlauf der Kühlkanäle ist eine Schwächung des Werkzeugs im Bereich dessen Achse vermieden. Die mechanische Stabilität des gesamten Werkzeugs ist wesentlich von der Geometrie der Spannuten beeinflusst. Vorzugsweise beträgt der Gesamtverdrehwinkel der Spannut, d.h. der Winkel zwischen dem schneidenseitigen und dem schaftseitigen Ende der Spannut, mindestens 90° und höchstens 160°, insbesondere mindestens 120° und höchstens 160°. Damit ist am schaftseitigen Ende der Spannuten eine Querschnittsgeometrie des Bohrers gegeben, welche besonders gut zur Aufnahme der bei der Zerspanung auftretenden Kräfte geeignet ist. Die vorstehenden Winkelangaben beziehen sich auf ein zweischneidiges Bohrwerkzeug. Bei drei- und mehrschneidigen Bohrern sind geringere Gesamtverdrehwinkel vorteilhaft.

Die Spannuten des Bohrers weisen vorzugsweise im Bereich der Bohrerspitze einen größeren Drallwinkel als im dem Schaft zugewandten Bereich auf. Der zur Werkzeugspitze hin zunehmende Drallwinkel, auch als Seitenspanwinkel bezeichnet, fördert eine einfache Spanabfuhr, während der vergleichsweise geringe Drallwinkel im der Werkzeugspitze abgewandten Bereich auch bei längeren Ausführungsformen des Bohrers, beispielsweise für Bohrtiefen von mehr als dem Dreifachen des Bohrerdurchmessers, eine vollständig gerade Ausbildung der Kühlkanäle ermöglicht. Vorzugsweise ist der Bohrer im an den Schaft angrenzenden Bereich gerade genutet.

Der Bohrer ist einstückig oder aus mehreren Teilen, beispielsweise mit festgeschraubten oder gelöteten Schneideinsätzen aufgebaut. Nach einer bevorzugten Ausgestaltung weist der Bohrer einen Grundkörper und einen auf diesen aufsetzbare Werkzeugspitze auf. Die Kühlkanäle verlaufen hierbei bevorzugt ausschließlich durch den Grundkörper. Die mechanische Stabilität der besonders beanspruchten Werkzeugspitze ist damit durch die Kühlkanäle nicht beeinträchtigt. Der Bohrer ist damit insbesondere auch für kleinere Durchmesserbereiche von weniger als 16 mm geeignet. Vorzugsweise ist die Werkzeugspitze am Grundkörper ohne Schraubverbindung und damit ohne eine entsprechende Querschnittsschwächung des Grundkörpers sowie der Werkzeugspitze gehalten.

Der Vorteil der Erfindung liegt insbesondere darin, dass in einem Bohrer mit teilweise gerader und teilweise gewendelter Spannut ein exzentrischer Kühlkanal vollständig gerade verläuft und direkt auf den bei der Bearbeitung entstehenden Span gerichtet ist.

Nachfolgend werden mehrere Ausführungsbeispiele der Erfindung anhand einer Zeichnung näher erläutert. Hierin zeigen:
- Fig. 1: in Seitenansicht einen Bohrer,
- Fig.2: den Bohrer nach Fig. 1 in perspektivischer Ansicht,
- Fig. 3a - d: verschiedene Ausführungsbeispiele von Bohrern in perspektivischer Ansicht,
- Fig. 4: eine Werkzeugspitze sowie ausschnittsweise einen Grundkörper eines mehrteiligen Bohrers,
- Fig. 5: eine Draufsicht auf die Werkzeugspitze eines Bohrers,
- Fig. 6: in perspektivischer Ansicht ausschnittsweise den Grundkörper nach Fig. 4,
- Fig. 7: eine Draufsicht auf den ausschnittsweise dargestellten Grundkörper nach Fig. 6,
- Fig. 8: schematisch verschiedene Bohrerquerschnitte,
- Fig. 9: eine Rückansicht des Grundkörpers nach Fig. 4,
- Fig. 10: eine perspektivische Detailansicht eines Grundkörpers mit eingesetzter Werkzeugspitze,
- Fig. 11: in einer Darstellung analog Fig. 10 schematisch die Kühlmittelzufuhr zur Werkzeugspitze, und
- Fig. 12: eine Gesamtansicht des Werkzeugs nach Fig. 11.

Einander entsprechende Teile sind in allen Figuren mit den gleichen Bezugszeichen versehen.

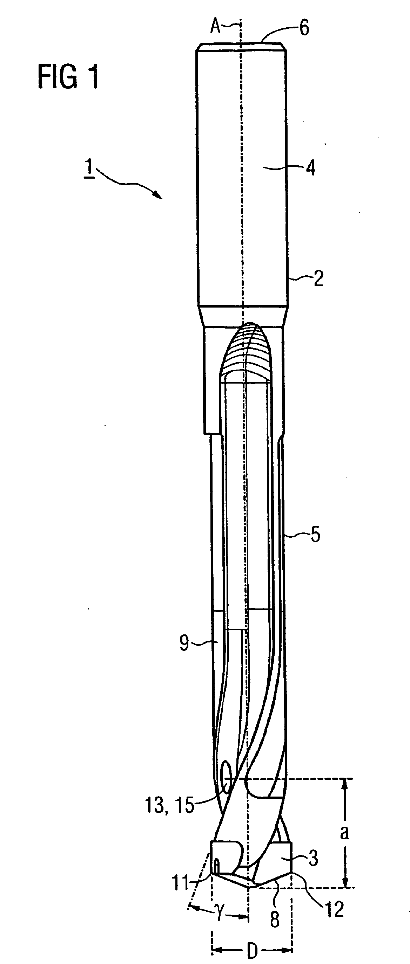

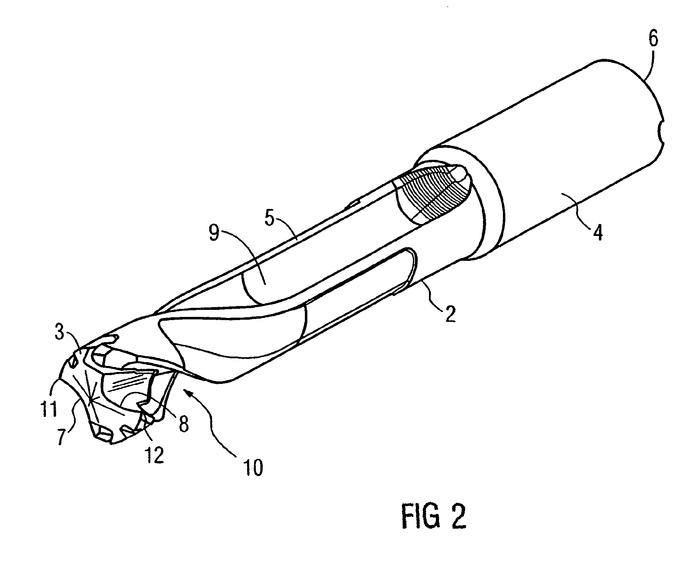

Die Fig.1 und 2 zeigen ein erstes Ausführungsbeispiel eines Bohrers 1, auch als Werkzeug bezeichnet, welcher aus einem Grundkörper 2 und einer Werkzeugspitze 3 zusammengesetzt ist. Der Grundkörper 2 ist vorzugsweise aus Stahl, die Werkzeugspitze 3 vorzugsweise aus Hartmetall gefertigt. Abweichend vom dargestellten Ausführungsbeispiel kann der Bohrer 1 auch einstückig, beispielsweise aus Hartmetall, gefertigt sein. Ebenso kann der Bohrer 1 mehrere auswechselbare Schneideinsätze, beispielsweise Wendeschneidplatten, aufweisen. Als Werkstoffe für den Bohrer 1 oder Teile desselben sind sämtliche in der Zerspanungstechnik gängigen Werkstoffe, auch Keramik, verwendbar. Für Schneideinsätze oder Beschichtungen ist beispielsweise PKD (polykristalliner Diamant) oder CBN (kubisches Bornitrid) geeignet.

Der Bohrer 1 weist einen Schaft 4 und daran anschließend ein Schneidteil 5, welches die Werkzeugspitze 3 umfasst, auf. Der Schaft 4, dessen Schaftende mit dem Bezugszeichen 6 versehen ist, ist im Ausführungsbeispiel als Zylinderschaft ausgeführt. Hiervon abweichende Schaftformen sind ebenfalls realisierbar.

Die Werkzeugspitze 3 weist zwei Schneidkanten 7,8 auf, von welchen aus sich jeweils eine Spannut 9,10 in Richtung zum Schaftende 6 erstreckt. Die am Übergang zwischen den Schneidkanten 7,8 und dem Werkzeugumfang des Bohrers 1 gebildeten Schneidecken tragen die Bezugszeichen 11,12. Zur Kühlmittelzuführung zu den Schneidkanten 7,8 sind Kühlkanäle 13,14 vorgesehen, deren Austrittsöffnungen 15,16 in den Spannuten 9,10 angeordnet sind. In Fig. 1 ist lediglich die Austrittsöffnung 15 sichtbar. Der axiale Abstand a, bezogen auf die Werkzeugachse A, zwischen der Mitte der Austrittsöffnung 15 und den Schneidecken 11,12 beträgt etwa 10% bis 25% mehr als der Werkzeugdurchmesser D des Bohrers 1.

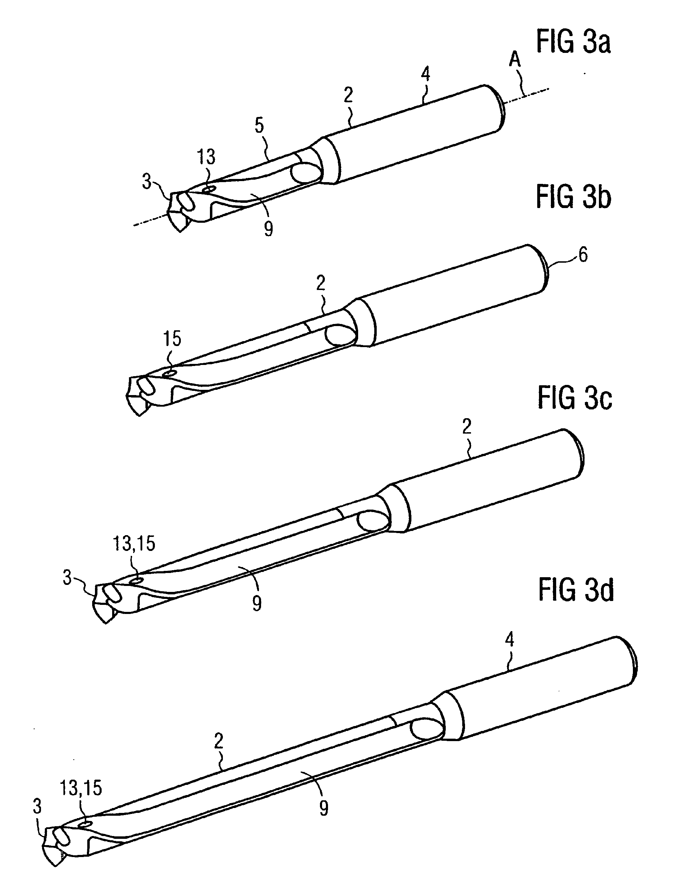

Die Fig. 3a bis 3d zeigen vier weitere Ausführungsbeispiele eines Bohrers 1, welche sich jeweils durch die Länge des Schneidteils 5 unterscheiden. In jedem Ausführungsbeispiel weist der Grundkörper 2 einen vorderen, gewendelten Bereich der Spannuten 9,10 auf, in welchem diese in die Werkzeugspitze 3 übergehen. Der Drallwinkel γ (Fig. 1) beträgt im Bereich der Werkzeugspitze 3 mehr als 15°. Damit sind niedrige Zerspanungskräfte, eine gute Spanformung und eine leichte Spanabfuhr gewährleistet. An den gedrallten oder gewendelten Bereich der Spannuten 9,10 schließt sich in Richtung zum Schaft 4 ein gerade genuteter Bereich an, wobei in den dargestellten Ausführungsbeispielen der gewendelte Abschnitt, der innerhalb einer Länge von weniger als dem doppelten Werkzeugdurchmesser D einen konstanten Drallwinkel γ aufweist, kontinuierlich in den gerade genuteten Bereich übergeht. Während in relativ kurzen Ausführungsformen des Werkzeugs 1 (Fig.3a) der gerade genutete Bereich entfallen kann, kann dieser in längeren Ausführungsformen den größten Teil der Länge des Schneidteils 5 einnehmen. In den Ausführungsbeispielen nach den Fig. 3a bis 3d beträgt die maximale Bohrtiefe das 3-, 5, 7- bzw. 10fache des Werkzeugdurchmessers D. In jedem Fall sind die Kühlkanäle 13,14, wovon in den Darstellungen jeweils lediglich die Austrittsöffnung 15 des Kühlkanals 13 sichtbar ist, parallel zur Werkzeugachse A verlaufend vollständig gerade ausgebildet.

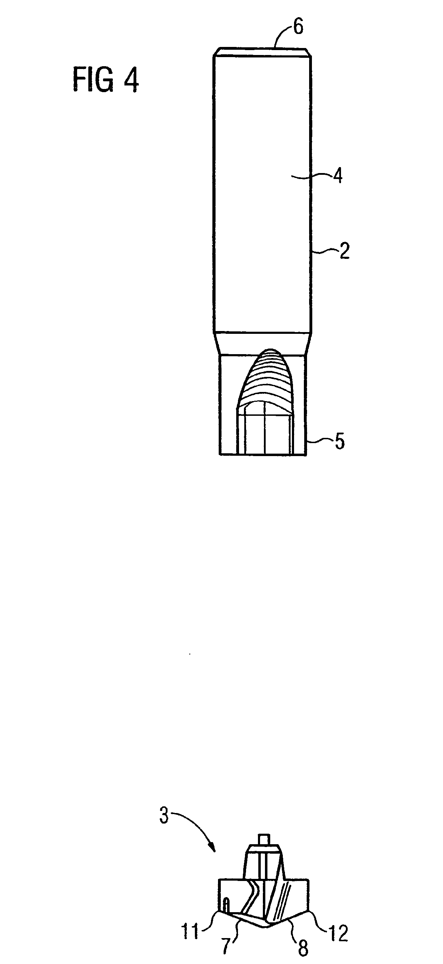

In Fig. 4 ist ausschnittsweise ein Grundkörper 2, entsprechend etwa den Ausführungsbeispielen nach den Fig. 3a bis 3d, sowie eine in den Grundkörper 2 einsetzbare Werkzeugspitze 3 dargestellt. Mögliche Formen der Werkzeugspitze 3 sind beispielsweise in der noch unveröffentlichten DE-Patentanmeldung 102 07 257.4-14 sowie der korrespondierenden internationalen Anmeldung PCT/EP03/01526 beschrieben. Durch die Möglichkeit der schraubenlosen Befestigung der Werkzeugspitze 3 auf dem Grundkörper 2 ist der Bohrer 1 besonders auch für kleinere Bohrdurchmesser, beispielsweise ab 12 mm, geeignet. In der Werkzeugspitze 3 befinden sich keine Kühlkanäle.

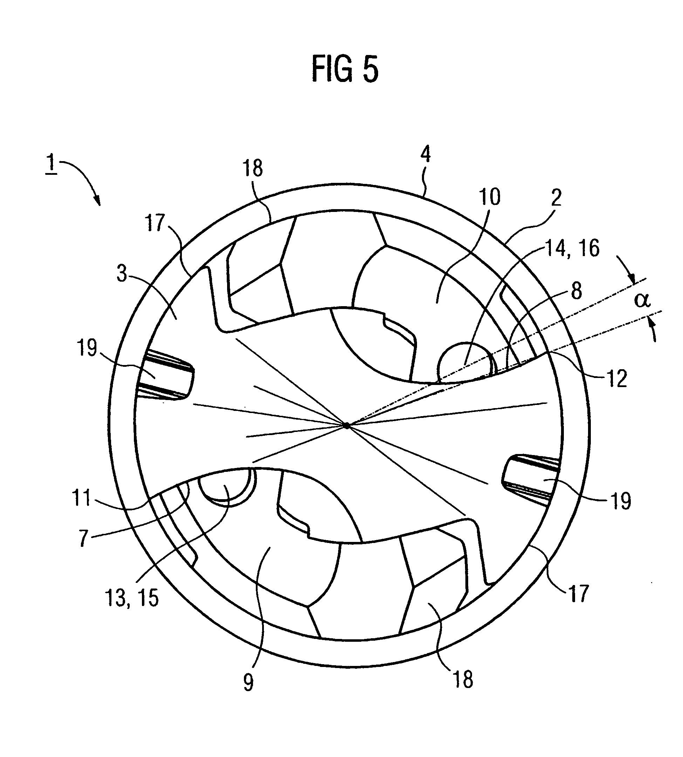

Die Fig. 5 zeigt eine Draufsicht auf die Werkzeugspitze 3 des Bohrers 1 nach den Fig. 1 und 2. Die als einteiliger Schneideinsatz ausgebildete Werkzeugspitze 3 weist entsprechend der Anzahl der Schneidkanten 7,8 zwei Flügel 17 auf, welche sich jeweils an einem Schenkel 18 des Grundkörpers 2 abstützen. Die Werkzeugspitze 3 ist damit in der Art eines Bajonettverschlusses in den Grundkörper 2 einsetzbar. Die Verdrehung der Werkzeugspitze 3 relativ zum Grundkörper 2 ist mittels eines nicht dargestellten Werkzeugs möglich, welches an zwei Nuten 19 der Werkzeugspitze 3 angreift.

Wie aus Fig. 5 ersichtlich ist, schneidet jede Schneidkante 7,8 den Querschnitt eines Kühlkanals 13,14, Der Winkel zwischen der Schneidecke 11,12 und der Mitte des Kühlkanals 13,14 ist als Verdrehwinkel α bezeichnet und beträgt bevorzugt zwischen - 5° und +15°. Die Kühlkanäle 13,14 verlaufen senkrecht zur dargestellten Ebene.

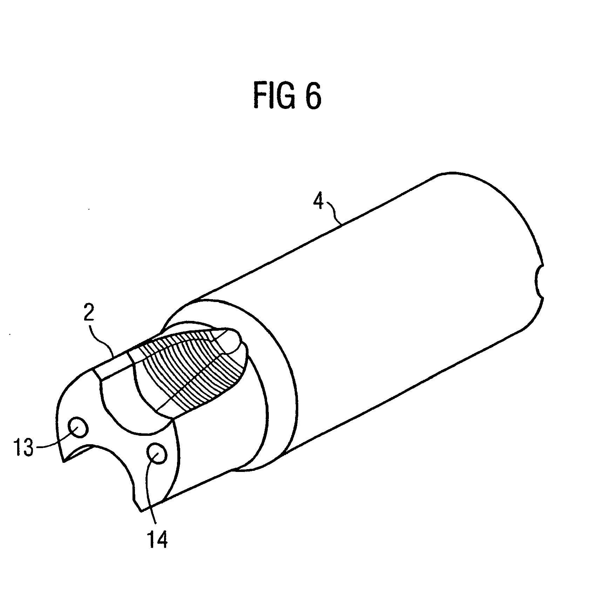

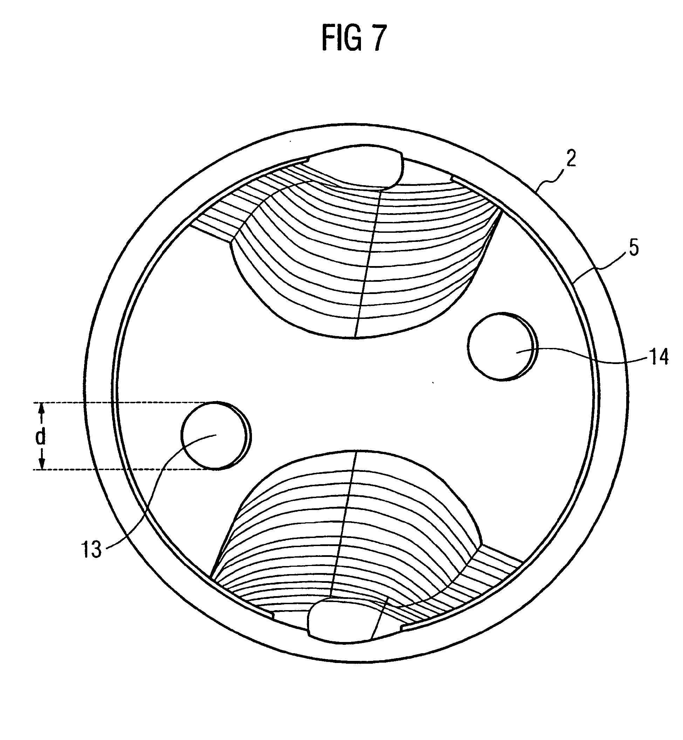

In Fig. 6 sind die Kühlkanäle 13,14 im ausschnittsweise dargestellten Grundkörper 2 sichtbar. Die Kühlkanäle 13,14 sind derart von der Werkzeugachse A und damit vom schwächsten Querschnittsbereich des Grundkörpers 2 beabstandet, dass selbst bei relativ großen Kühlkanälen 13,14 die mechanische Stabilität des Grundkörpers 2 nicht wesentlich beeinträchtigt ist. Der Kühlkanaldurchmesser d (Fig. 7) beträgt ca. 10 bis 15% des auf die Werkzeugspitze 3 bezogenen Werkzeugdurchmessers D.

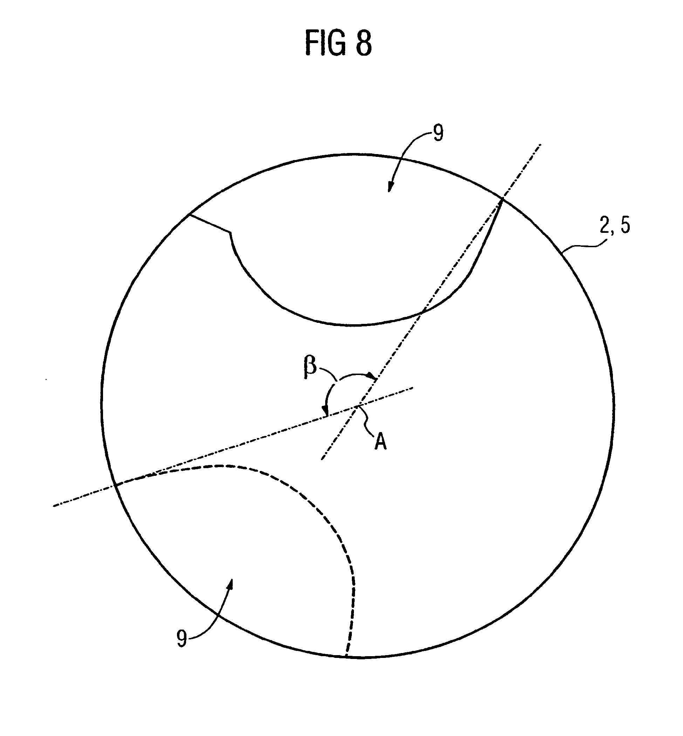

In Fig. 8 ist schematisch der Verlauf der Spannut 9 längs der Werkzeugachse A veranschaulicht. Dargestellt ist die Kontur der Spannut 9 im gerade genuteten, an den Schaft 4 anschließenden Bereich sowie, in gestrichelter Darstellung, die Kontur der Spannut 9 im Bereich der Schneidecke 11. Der Gesamtwinkel, um welchen die Spannut 9 gewendelt ist, ist als Gesamtverdrehwinkel β angegeben. Die zweite Spannut 10 ist in Fig. 8 nicht dargestellt. Der Gesamtverdrehwinkel β ist mit 90 bis 160° derart bemessen, dass das prinzipiell eine Doppel-T-Form aufweisende Querschnittsprofil des Grundkörpers 2 im gerade genuteten, dem Schaft 4 zugewandten Bereich die von den Schneidkanten 7,8 auf den Grundkörper 2 übertragenen Kräfte mit besonders geringer Biegung des Bohrers 1 aufnimmt.

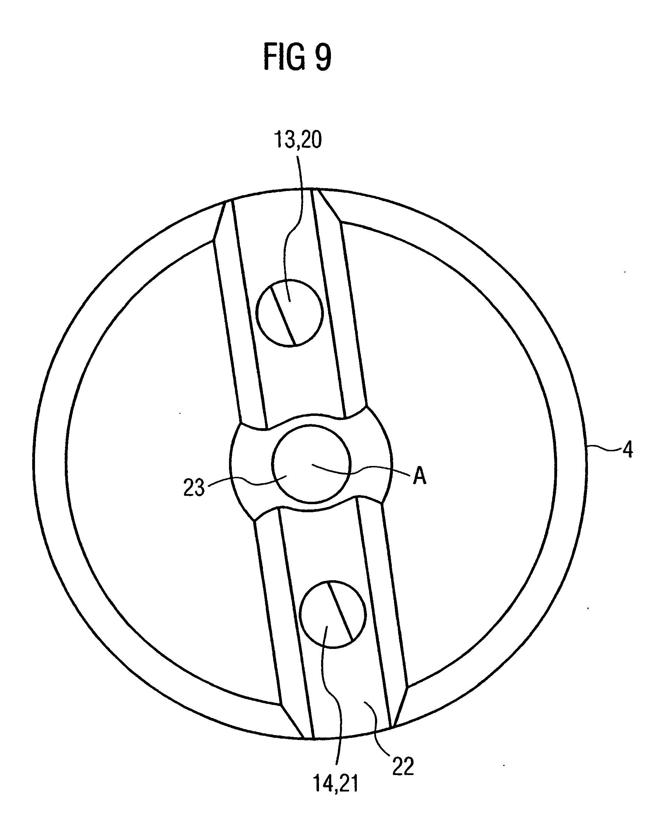

Die Fig. 9 zeigt eine Rückansicht des Grundkörpers 2 mit den Kühlkanälen 13,14, deren Einlassöffnungen 20,21 am Schaftende 6 in einer Quernut 22 angeordnet sind. Symmetrisch zur Werkzeugachse A befindet sich ein Zentrierkegel 23. Eine Kühlmittelzuführung in diesem Bereich ist nicht vorgesehen.

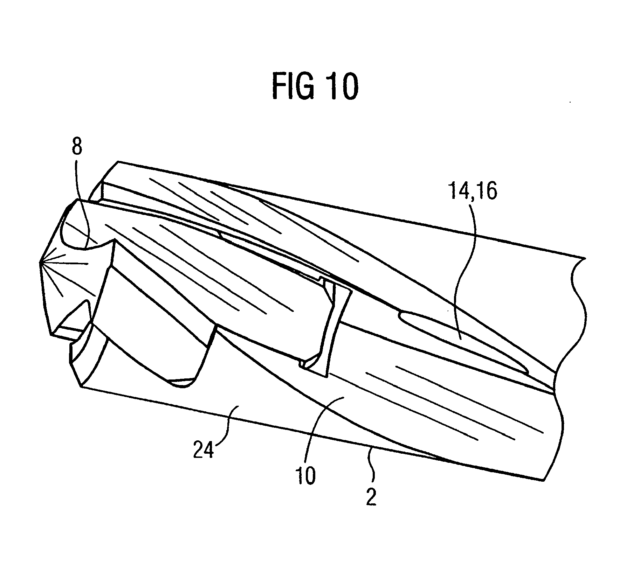

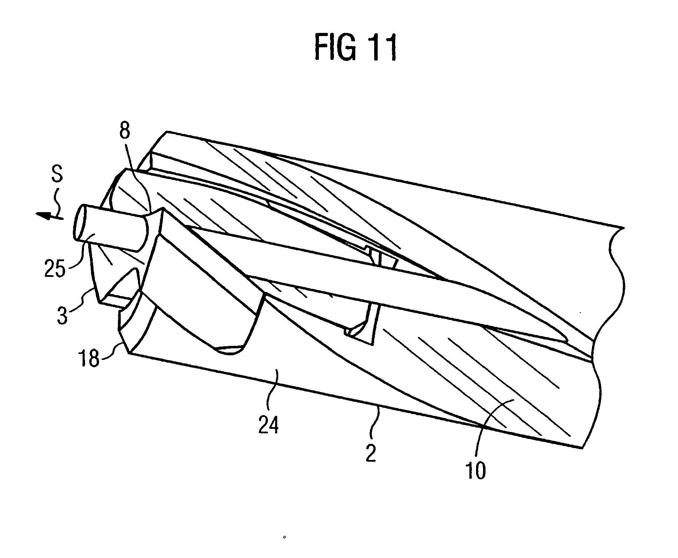

Die Fig. 10 zeigt im Detail ein weiteres Ausführungsbeispiel eines aus einem Grundkörper 2 und einer Werkzeugspitze 3 zusammengesetzten Bohrers 1. Die Austrittsöffnungen 15,16 befinden sich in diesem Fall am Rand der Spannuten 9,10, d.h. nahe des Übergangsbereichs zum Rücken 24 des Bohrers 1. In Fig. 11 ist schematisch der Verlauf eines Kühlmittelstrahls 25 eingezeichnet. Wie aus der Darstellung ersichtlich ist, trifft der Kühlmittelstrahl 25 in der Nähe der Schneidkante 7,8 auf die Werkzeugspitze 3. Der die Werkzeugspitze 3 durchdringende Teil des Kühlmittelstrahls 25 ist lediglich zur geometrischen Verdeutlichung der Strahlrichtung S des Kühlmittels, welche im Wesentlichen zur Werkzeugachse A parallel ist, dargestellt. Tatsächlich trifft der Kühlmittelstrahl 25 auf den an der Schneidkante 7,8 erzeugten Span, so dass dieser durch unmittelbare Kühlmittelbeaufschlagung kurz nach der Spanerzeugung intensiv gekühlt wird. Ein Wärmeübergang vom Span auf den Bohrer 1 wird damit weitgehend unterbunden. Gleichzeitig ist an der Schneidkante 7,8 eine insbesondere bei der Zerspanung harter Werkstoffe vorteilhafte hohe Temperatur erreichbar. Durch die Ausrichtung des Kühlmittelstrahls 25 innerhalb des Querschnitts des Bohrers 1 längs der Werkzeugachse A ist die Kühlung und Schmierung bereits unmittelbar beim Ansetzen des Bohrers 1 an das zu bearbeitende Werkstück wirksam.

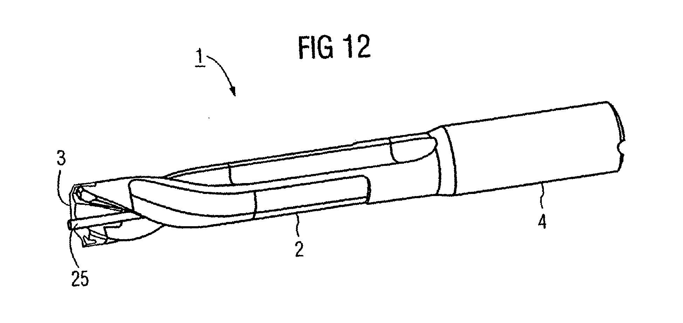

In Fig. 12 ist analog Fig. 11 der Bohrer 1 mit schematisch angedeutetem Kühlmittelstrahl 25 dargestellt. Durch die vollständig geradlinige Durchleitung des Kühlschmiermittels durch den Bohrer 1 ist eine sehr widerstandsarme Strömung gegeben, wobei keine Entmischungseffekte auftreten. Der Bohrer 1 ist damit besonders für Minimalmengenschmierung geeignet.

### Bezugszeichenliste

| | | | |
|---|---|---|---|
| 1 | Bohrer | 16 | Austrittsöffnung |
| 2 | Grundkörper | 17 | Flügel |
| 3 | Werkzeugspitze | 18 | Schenkel |
| 4 | Schaft | 19 | Nut |
| 5 | Schneidteil | 20 | Einlassöffnung |
| 6 | Schaftende | 21 | Einlassöffnung |
| 7 | Schneidkante | 22 | Quernut |
| 8 | Schneidkante | 23 | Zentirerkegel |
| 9 | Spannut | 24 | Rücken |
| 10 | Spannut | 25 | Kühlmittelstrahl |
| 11 | Schneidecke | | |
| 12 | Schneidecke | α | Verdrehwinkel |
| 13 | Kühlkanal | β | Gesamtverdrehwinkel |
| 14 | Kühlkanal | γ | Drallwinkel |
| 15 | Austrittsöffnung | | |
| A | Werkzeugachse | | |
| D | Werkzeugdurchmesser | | |
| a | Abstand | | |
| d | Kühlkanaldurchmesser | | |
| S | Strahlrichtung | | |

## Patentansprüche

1. Bohrer mit mindestens zwei Schneidkanten (7,8) und jeweils einer von diesen in Richtung zu einem Schaftende (6) ausgehenden, zumindest teilweise gewendelten Spannut (9,10),
**gekennzeichnet durch**
vom Schaftende (6) ausgehende, durchgehend parallel zur Werkzeugachse (A) verlaufende Kühlkanäle (13,14), deren Austrittsöffnungen (15,16) in den Spannuten (9,10) angeordnet und auf die Schneidkanten (7,8) gerichtet sind.

2. Bohrer nach Anspruch 1,
**gekennzeichnet durch**
einen Gesamtverdrehwinkel (b) der Spannut (9,10) von mindestens 90°.

3. Bohrer nach Anspruch 1 oder 2,
**gekennzeichnet durch**
einen Gesamtverdrehwinkel (b) der Spannut (9,10) von maximal 160°.

4. Bohrer nach einem der Ansprüche 1 bis 3,
**dadurch gekennzeichnet,**
**dass** die Spannut (9,10) einen zur Schneidkante (7,8) hin ansteigenden Drallwinkel (g) aufweist.

5. Bohrer nach einem der Ansprüche 1 bis 4,
**dadurch gekennzeichnet,**
**dass** die Spannut (9,10) einen nicht gewendelten Bereich aufweist.

6. Bohrer nach einem der Ansprüche 1 bis 5,
**gekennzeichnet durch**
einen Verdrehwinkel (a) zwischen der Austrittsöffnung (15,16) des Kühlka-nals (13,14) und der Schneidkante (7,8) von mindestens -20°.

7. Bohrer nach einem der Ansprüche 1 bis 6,
**gekennzeichnet durch**
einen Verdrehwinkel (a) zwischen der Austrittsöffnung (15,16) des Kühlka-nals (13,14) und der Schneidkante (7,8) von maximal 45°.

8. Bohrer nach einem der Ansprüche 1 bis 7,
**gekennzeichnet durch**
einen axialen Abstand (a) zwischen der Austrittsöffnung (15,16) des Kühl-kanals (13,14) und einem die Schneidkante (7,8) am Werkzeugumfang be-grenzenden Schneidecke (11,12) von mindestens 75% des Werkzeug-durchmessers (D).

9. Bohrer nach einem der Ansprüche 1 bis 8,
**gekennzeichnet durch**
einen axialen Abstand (a) zwischen der Austrittsöffnung (15,16) des Kühl-kanals (13,14) und einem die Schneidkante (7,8) am Werkzeugumfang be-grenzenden Schneidecke (11,12) von höchstens dem doppelten Werk-zeugdurchmesser (D).

10. Bohrer nach einem der Ansprüche 1 bis 9,
**gekennzeichnet durch**
eine auf einen Grundkörper (2) aufsetzbare Werkzeugspitze (3).

11. Bohrer nach Anspruch 10,
**dadurch gekennzeichnet,**
**dass** die Austrittsöffnung (15,16) des Kühlkanals (13,14) im Grundkör-per (2) angeordnet ist.

## Claims

1. Drill having at least two cutting edges (7, 8) and in each case one at least partially coiled chip groove (9, 10) which proceeds from said cutting edges (7, 8) in the direction of a shank end (6),
**characterized by**
cooling ducts (13, 14) which proceed from the shank end (6) and run continuously parallel to the tool axis (A), the outlet openings (15, 16) of which cooling ducts (13, 14) are arranged in the chip grooves (9, 10) and are aligned towards the cutting edges (7, 8).

2. Drill according to Claim 1,
**characterized by**
a total twisting angle (β) of the chip groove (9, 10) of at least 90°.

3. Drill according to Claim 1 or 2,
**characterized by**
a total twisting angle (β) of the chip groove (9, 10) of a maximum of 160°.

4. Drill according to one of Claims 1 to 3,
**characterized**
**in that** the chip groove (9, 10) has an angle of twist (γ) which increases towards the cutting edge (7, 8).

5. Drill according to one of Claims 1 to 4,
**characterized**
**in that** the chip groove (9, 10) has a non-coiled region.

6. Drill according to one of Claims 1 to 5,
**characterized by**
a twisting angle (α) between the outlet opening (15, 16) of the cooling duct (13, 14) and the cutting edge (7, 8) of at least -20°.

7. Drill according to one of Claims 1 to 6,
**characterized by**
a twisting angle (α) between the outlet opening (15, 16) of the cooling duct (13, 14) and the cutting edge (7, 8) of a maximum of 45°.

8. Drill according to one of Claims 1 to 7,
**characterized by**
an axial spacing (a) between the outlet opening (15, 16) of the cooling duct (13, 14) and a cutting corner (11, 12), which delimits the cutting edge (7, 8) at the tool periphery, of at least 75% of the tool diameter (D).

9. Drill according to one of Claims 1 to 8,
**characterized by**
an axial spacing (a) between the outlet opening (15, 16) of the cooling duct (13, 14) and a cutting corner (11, 12), which delimits the cutting edge (7, 8) at the tool periphery, of at most double the tool diameter (D).

10. Drill according to one of Claims 1 to 9,
**characterized by**
a tool tip (3) which can be placed on a base body (2).

11. Drill according to Claim 10,
**characterized**
**in that** the outlet opening (15, 16) of the cooling duct (13, 14) is arranged in the base body (2).

## Revendications

1. Foret comportant au moins deux arêtes coupantes (7, 8) et une rainure à copeaux (9, 10) respective partant de celles-ci en direction d'une extrémité de fût (6) et au moins partiellement hélicoïdale, **caractérisé par** des canaux de refroidissement (13, 14) partant de l'extrémité de fût (6) et s'étendant parallèlement de façon continue par rapport à l'axe d'outil (A), dont les ouvertures de sortie (15, 16) sont agencées dans les rainures à copeaux (9, 10) et sont dirigées vers les arêtes coupantes (7, 8).

2. Foret selon la revendication 1, **caractérisé par** un angle de torsion total (b) de la rainure à copeaux (9, 10) d'au moins 90°.

3. Foret selon la revendication 1 ou 2, **caractérisé par** un angle de torsion total (b) de la rainure à copeaux (9, 10) d'au maximum 160°.

4. Foret selon l'une des revendications 1 à 3, **caractérisé en ce que** la rainure à copeaux (9, 10) présente une inclinaison (g) croissante vers l'arête de coupe (7, 8).

5. Foret selon l'une des revendications 1 à 4, **caractérisé en ce que** la rainure à copeaux (9, 10) présente une région non hélicoïdale.

6. Foret selon l'une des revendications 1 à 5, **caractérisé par** un angle de torsion (a) d'au moins -20° entre l'ouverture de sortie (15, 16) du canal de refroidissement (13, 14) et l'arête coupante (7, 8).

7. Foret selon l'une des revendications 1 à 6, **caractérisé par** un angle de torsion (a) d'au maximum 45° entre l'ouverture de sortie (15, 16) du canal de refroidissement (13, 14) et l'arête de coupe (7, 8).

8. Foret selon l'une des revendications 1 à 7, **caractérisé en ce que** la distance axiale (a) entre l'ouverture de sortie (15, 16) du canal de refroidissement (13, 14) et un angle de coupe (11, 12) limitant l'arête de coupe (7, 8) sur la périphérie de l'outil est d'au moins 75 % du diamètre d'outil (D).

9. Foret selon l'une des revendications 1 à 8, **caractérisé en ce que** la distance axiale (a) entre l'ouverture de sortie (15, 16) du canal de refroidissement (13, 14) et un angle de coupe (11, 12) limitant l'arête de coupe (7, 8) sur la périphérie de l'outil est au plus le double du diamètre d'outil (D).

10. Foret selon l'une des revendications 1 à 9, **caractérisé par** une pointe d'outil (3) susceptible d'être placée sur un corps de base (2).

11. Foret selon la revendication 10, **caractérisé en ce que** l'ouverture de sortie (15, 16) du canal de refroidissement (13, 14) est agencée dans le corps de base (2).
